Europäisches Patentamt

European Patent Office

Office européen des brevets

(11) Publication number: **0 155 119**
**B1**

(12) **EUROPEAN PATENT SPECIFICATION**

(45) Date of publication of patent specification: **25.07.90**

(21) Application number: **85301342.3**

(22) Date of filing: **27.02.85**

(51) Int. Cl.⁵: **B 60 P 1/48,** B 60 P 1/64

(54) **Container and lifting mechanism.**

(30) Priority: **27.02.84 GB 8405030**
**19.07.84 GB 8418418**

(43) Date of publication of application:
**18.09.85 Bulletin 85/38**

(45) Publication of the grant of the patent:
**25.07.90 Bulletin 90/30**

(84) Designated Contracting States:
**DE FR**

(56) References cited:
**EP-A-0 014 512**
**DE-A-2 903 462**
**FR-A-2 278 531**
**GB-A-2 033 346**
**US-A-3 984 013**

(73) Proprietor: **MULTILIFT LIMITED**
**Harlescott Lane**
**Shrewsbury Shropshire, SY1 3AG (GB)**

(72) Inventor: **Raisio, Reijo Juhani**
**Mytton Oak Road**
**Shrewsbury Shropshire, SY3 8XD (GB)**

(74) Representative: **Cook, Anthony John et al**
**D. YOUNG & CO. 10, Staple Inn**
**London, WC1V 7RD (GB)**

Courier Press, Leamington Spa, England.

## Description

This invention relates to a method and arrangement for lifting containers onto vehicles.

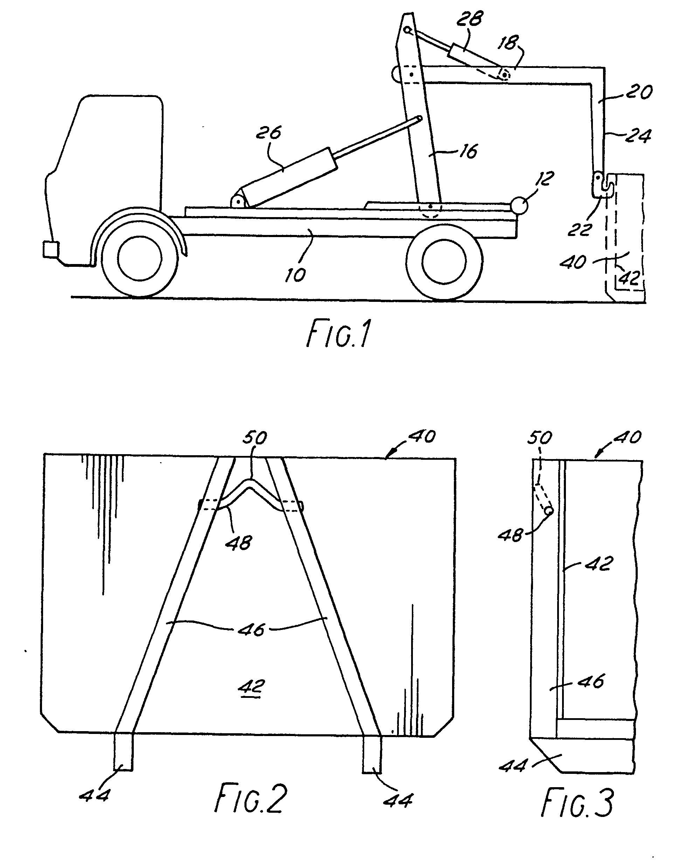

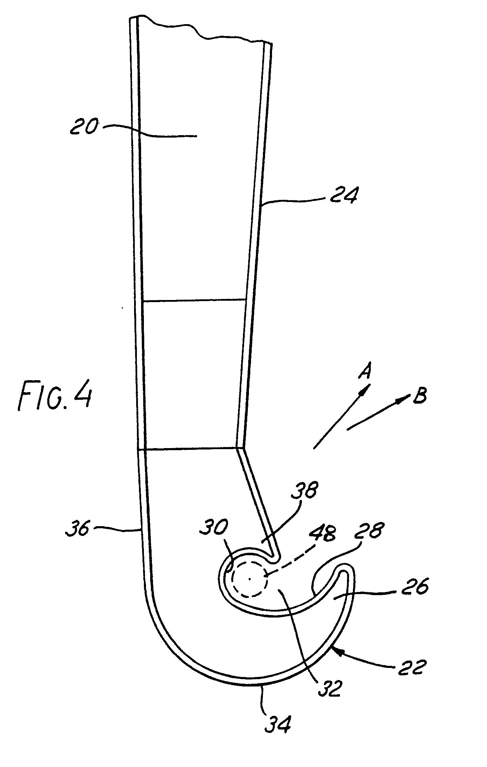

It has been proposed, e.g. in British Patent Specification Numbers 1,327,928 and 2,033,346 to lift load-carrying members such as containers onto vehicles over the rear of the vehicle using a lifting mechanism of which a hook or equivalent (which may more generally be called an attachment member) engages a hook bar or its equivalent located centrally of the container rear to its upper front edge. Since the containers when loaded weigh many tons, it is conventional for the hook bar to be connected to the container by a strongly-built frame normally called an "A-frame". The task of a driver of the vehicle, when he desires to pick up a container, is to manoeuvre the vehicle and/or the lifting mechanism so that the hook is properly placed relative to the hook bar in the vertical direction and so that the hook is aligned with the hook bar laterally of the vehicle. As the vehicle may be many metres long, and as the driver's vision to the rear is obstructed by both the lifting mechanism and the vehicle chassis, this is a difficult task and it is made more difficult by poor light or sloping ground. In many prior arrangements known to the Applicant, see for example U.S. Patent No. 3 984 013, Figure 1 or 6, the above-mentioned British '346 Patent, Figure 4, European Application 14513, Figure 4, and German Patent Specification (DE—A—) No. 2 903 462, Figure 3, it has been conventional to have the arm of the lifting mechanism which supports the hook sloping downwardly to the hook at a substantial angle, e.g. 30 to 60°, to the vertical when the mechanism is positioned just prior to connection of the hook and the hook bar.

The present invention aims to solve the problem of providing equipment whereby the vehicle driver's task is simplified. That is to say, using equipment according to the invention, the driver can reverse a vehicle, readily engage the hook with an A-frame on a container, and then lift the container onto the vehicle.

According to the present invention, there is provided, in combination a container having an end wall, the end wall having structural members which support a hook bar and define an 'A' frame and a lifting mechanism for mounting on a vehicle and having a hook for lifting the container having the hook bar onto the vehicle, the arm which supports the hook being provided with a substantially planar rear face, the hook tip standing proud of this face and the lifting mechanism being such that the rear face is disposed substantially vertical when the hook is about to engage with the hook bar in a lifting operation, the hook being characterised by a curved tip defining a recess which is bounded on part of its upper side by a thumb portion intended to preclude disengagement of the hook from the hook bar by restraining hook movement out of the recess, the hook also having the inner portion of the recess in part bounded by a wall, the curved tip of the hook standing proud of the said rear face by a distance which is over 2.5 times the diameter of the cylinder, part of whose curved surface defines the inner portion of the hook recess.

As will be better understood from the following description in operation, an arm of the mechanism which carries the hook is disposed so that the arm is substantially vertical prior to engaging the hook, and the vehicle is then reversed so that the said arm engages in a face to face manner one of the structural members defining an A-frame on the container. The hook is then lifted.

Using this procedure, the driver of the vehicle merely has to place the vehicle in such a position that the hook will come within the outline defined by the A-frame and will be below the level of the hook bar when the vehicle is reversed straight back, then reverse the vehicle until the rear face of the arm comes into contact with one of the A-frame members, and then actuate the lifting mechanism. As the hook tip stands proud of the rear face of the arm, the hook tip if it is not centred already, will be centred as it rises due to the guiding effect of one of the A-frame members, and the hook will thus be guided to engage the underside of the hook bar.

Once the hook is engaged with the hook bar, the continued actuation of the mechanism lifts the container onto the vehicle according to the principles explained, for example in Patent No. 2 033 346 already referred to.

The invention will be better understood from the following non-limiting description of an example thereof given with reference to the accompanying drawings in which:—

Figure 1 is a diagrammatic side elevation of one example of a vehicle embodying the invention;

Figure 2 is an end elevation of one example of a container which can be lifted onto a vehicle using the invention;

Figure 3 is a side view of the forward end of the container shown in Figure 2; and

Figure 4 illustrates a preferred form of hook.

The vehicle illustrated in Figure 1 includes a lifting mechanism by which a container can be lifted onto the vehicle over the rear end. The vehicle has a chassis 10 carrying container-supporting rollers 12 at its rear end. Pivotable first and second frames 16 and 18 support a hook 22. The frame 18 includes an arm 20 at the lower end of which is suspended the hook 22. The frame 16 is pivoted to the chassis 10. The front face 24 of the arm 20 is maintained substantially vertical during the stage of attaching the hook to the container and the hook 22 has a tip which stands proud (in a rearward direction) of this vertical surface 24. The lifting mechanism including frames 16 and 18 is actuated by hydraulic rams 26 and 28. In practice there may be a parallel pair of rams 26. It will be appreciated that during actuation, the arm 20 does not remain always vertical but the sizes of the frames 16 and 18 and the positions of their pivot axes are chosen so that the arm 20 is substantially vertical (in contrast to prior art arrangements) when the lifting mechanism is disposed in its "ready to attach the hook" position and during the operation of connecting the hook to the container.

One example of container 40 is illustrated in Figures 2 and 3. It has a front wall 42, and underside beams 44 which serve as supports contacting the ground and as skids, co-operating with the rollers 12, during the loading operation. The side walls and the rear wall of the container may be strengthened by beams in conventional manner. The front wall 42 of the container has sloping beams 46 attached thereto, defining a so called A-frame. At the top region of the A-frame a hook bar 48 extends between the beams 46. It is securely fixed, e.g. welded, to each beam 46. It is preferred that the hook bar should be curved as seen in Figure 2 and angled so that its top position 50 is forwardly located, as seen in Figure 3. It is preferred, although not essential, that the hook bar 48 should not project forwardly of the plane occupied by the front surfaces of the beams 46.

An alternative form of load-carrying member can be employed in a method and with a lifting mechanism according to the invention. Such a load-carrying member has a flat platform upon which the load is secured and an upstanding front wall. The front wall is constructed with sloping beams and a hook bar in a similar manner to the front wall 42 described above.

Figure 4 illustrates a preferred form of hook 22, carried at the lower end of an arm 20. The hook is characterised by a curved tip 26 defining a curved upper surface 28 leading to a wall 30 of a recess 32 and a lower curved surface 34 which curves smoothly round to merge with a surface 36 of the arm 20. The curved wall 30 continues round to form the boundary of a thumb portion 38 whose function is to limit upward movement of a hook bar relative to the hook and to restrain or inhibit movement of the hook bar (shown dotted at 48) in the direction of the arrow A or arrow B relative to the hook. Such movement might occur, for example, in the absence of the thumb portion 38, when the lifting mechanism is being operated to demount a container or platform from a vehicle, and the resulting disconnection of the platform from the hook can be dangerous and can cause serious damage.

It will be observed that the hook tip 26 stands proud of the surface 24 by a distance which is substantially greater than, e.g. over twice the diameter of a hook bar for which the hook is intended. Such a design of hook facilitates reliable pick-up of containers when using the operating method outlined above.

The invention also resides in a particular form of hook, of the kind illustrated in Figure 4. Such a hook is preferably integral with or secured to a hook member having a substantially flat front face and having a so-called thumb portion at its lower end. The hook is characterised by a curved tip whose curved upper surface defines a recess, the tip standing proud of the above-mentioned front face. The curved upper surface continues to curve around and upwardly so that an inner region of the recess has a substantially part-circular wall, the upper region of which is the underside of the thumb portion. The function of the thumb portion is to limit upward movement of a hook bar relative to the hook and also to restrain or inhibit movement of a hook bar located in the recess out of the recess, that is to say to inhibit movement of the hook bar relative to the hook in a direction upwardly and about 45 to 60 degrees to the abovementioned front face.

Referring for a moment to Figure 4, the hook recess is entered *via* a mouth space located between the tip of the thumb portion 28 and the tip of the hook 26. The inner portion of the hook recess 32 is defined by a substantially part-circular wall 30. The diameter of the relevant circle is herein referred to as "$d$". In a preferred embodiment of hook as disclosed herein, the width of the hook mouth (i.e. the distance between the tip of thumb portion 38 and the tip of the hook 26 is from 1.2 $d$ to 1.7 $d$. Another preferred feature of such a hook is that the tip of the hook 26 stands proud of the surface 24 by at least 2.5 $d$.

## Claims

1. In combination, a container (40) having an end wall (42), the end wall having structural members (46) which support a hook bar (48) and define an 'A' frame and a lifting mechanism (16, 18, 26, 28) for mounting on a vehicle and having a hook (22) for lifting the container (40) having the hook bar (48) onto the vehicle, the arm (24) which supports the hook being provided with a substantially planar rear face, the hook tip (26) standing proud of this face and the lifting mechanism being such that the rear face is disposed substantially vertical when the hook (22) is about to engage with the hook bar (48) in a lifting operation, the hook being characterised by a curved tip (26) defining a recess (32) which is bounded on part of its upper side by a thumb portion (38) intended to preclude disengagement of the hook (22) from the hook bar (48) by restraining hook bar movement out of the recess (32) the hook (22) also having the inner portion of the recess (32) in part bounded by a part-circular wall (30), the curved tip (26) of the hook (22) standing proud of the said rear face by a distance which is over 2.5 times the diameter of the part-circular wall, part of whose curved surface defines the inner portion of the hook recess 32.

2. A combination according to claim 1 in which the entry to the hook recess (32) is formed by a mouth space between the tip of the hook and a tip of the thumb portion, characterised in that the width of the mouth space is from 1.2 to 1.7 times the said cylinder diameter.

## Patantensprüche

1. Kombination aus einem Container (40) mit einer Stirnwand (42), welche Bauelemente (46) hat, die eine Hakenstange (48) tragen und einen "A"-förmigen Rahmen definieren, einem Hubmechanismus (16, 18, 26, 28), zum Befestigen auf einem Fahrzeug und mit einem Haken (22), zum Anheben des Containers (40) mit der Hakenstange (48) auf das Fahrzeug, wobei der Arm (24), welcher den Haken trägt, mit einer im wesentlichen ebenen hinteren Fläche versehen ist, die Hakenspitze (26) aus dieser Fläche hervorsteht und der Hubmechanismus derart ist, daß die rückwärtige Fläche im wesentlichen vertikal angeordnet ist, wenn der Haken (22) für den Eingriff mit der Hakenstange (48) bei einem Hubvorgang bereit ist, und wobei der Haken gekennzeichnet ist durch eine gekrümmte Spitze (26), welche eine Aussparung (32) definiert, welche auf ihrer oberen Seite teilweise durch einen Zapfenabschnitt (38) begrenzt ist, der das Außereingrifftreten des Hakens (22) mit der Hakenstange (48) durch Einschränkung der Hakenstangenbewegung aus der Aussparung (42) heraus verhindern soll, wobei der innere Abschnitt der Aussparung (32) des Hakens (22) teilweise auch durch eine Wand (30) begrenzt wird und die gekrümmte Spitze (26) des Hakens (22) aus der rückwärtigen Fläche um einen Abstand hervorsteht, der mehr als das Zweieinhalbfache des Durchmessers des Zylinders beträgt, wobei ein Teil von dessen gekrümmter Oberfläche den inneren Abschnitt der Hakenaussparung (32) definiert.

2. Kombination nach Anspruch 1, bei welcher der Eingang in die Hakenaussparung (32) durch eine Maulöffnung zwischen der Spitze des Hakens und einer Spitze des Zapfenabschnittes gebildet wird, dadurch gekennzeichnet, daß die Breite des Maules zwischen dem 1,2-Fachen und dem 1,7-Fachen des Zylinderdurchmessers liegt.

## Revendications

1. Ensemble composé d'un conteneur (40) présentant une paroi d'extrémité (42) munie d'organes de structure (46) qui supportent une barre d'accrochage (48) et définissent un cadre en A et d'un mécanisme de levage (16, 18, 26, 28) destiné à être monté sur un véhicule et qui est pourvu d'un crochet (22) pour soulever sur le véhicule le conteneur (40) pourvu de la barre d'accrochage (48), le bras (24) qui supporte le crochet présentant une face arrière essentiellement plane, le bout du crochet (26) formant saillie sur cette face et le mécanisme de levage étant tels que la face arrière est disposée essentiellement verticalement lorsque le crochet (22) est sur le point de s'engager sur la barre d'accrochage (48) lors d'une opération de soulèvement, caractérisé en ce que le crochet porte un bout incurvé (26) définissant un évidement (32) qui est limité sur une partie de son côté supérieur par une portion en forme de patte (38) conçue pour limiter le mouvement du crochet (22) hors de l'évidement (32) et l'empêcher de se libérer de la barre d'accrochage (48), le crochet (22) présentant également une portion de l'évidement (32) qui est partiellement limitée par une paroi en forme de portion de cercle (30), le bout incurvé (26) du crochet (22) formant saillie sur ladite face arrière sur une longueur représentant environ deux fois et demie le diamètre de ladite paroi circulaire, dont une partie de la surface incurvée définit la partie intérieure de l'évidement de crochet (32).

2. Ensemble selon la revendication 1, dans lequel l'entrée de l'évidement de crochet (32) est formée par un intervalle d'embouchure situé entre le bout du crochet et un bout de la partie en forme de patte, caractérisé en ce que la largeur dudit intervalle est comprise entre 1,2 et 1,7 fois le diamètre de ladite paroi circulaire.

Fig.1

Fig.2

Fig.3

FIG.4

20

24

A

B

38

36

30

48   28

26

22

32

34